# FASCICULE DE BREVET EUROPEEN

(11) **EP 0 990 841 B1**
(45) Date de publication et mention de la délivrance du brevet: **14.04.2010**
(21) Numéro de dépôt: 99203095.7
(22) Date de dépôt: 21.09.1999
(51) Int. Cl.: F21V 8/00

(54) **Dispositif optique d'extrémité pour un guide de lumière destiné à l'éclairage**
Optische Endpunktgerät für Beleuchtungslichtleiter
Endpoint optical device for a lightguide with illumination purpose

(30) Priorité: 29.09.1998 FR 9812161
(43) Date de publication de la demande: 05.04.2000
(73) Titulaire: Koninklijke Philips Electronics N.V., 5621 BA Eindhoven (NL)
(72) Inventeur: Montagne, Louis, 75008 Paris (FR)
(74) Mandataire: Roche, Denis

(56) Documents cités:
- EP-A- 0 177 104
- EP-A- 0 857 913
- US-A- 5 430 620
- US-A- 5 774 271

## Description

La présente invention concerne un dispositif optique d'extrémité, pour un conduit de lumière destiné à l'éclairage, muni d'un ensemble optique comportant au moins une lentille et tel que définie dans les revendications 1 et 2.

Un dispositif optique selon le préambule ci-dessus est connu de la demande de brevet FR 2 571 504. Ce document concerne un générateur de lumière.

Un luminaire comprenant un faisceau de fibres optiques est connu du document US-A-5,774,271.

Un objet de l'invention est de fournir un dispositif optique, placé à la sortie de lumière d'un conduit optique, qui procure une tache éclairée de forme déterminée et de luminosité aussi homogène que possible.

A cet effet le dispositif, placé à la sortie du conduit de lumière et destiné à procurer une tache éclairée, comprend un embout transparent, dit de mise en forme, abouté à l'extrémité du conduit de lumière et possédant un diaphragme de sortie dont la forme est celle désirée pour la tache éclairée, et l'ensemble optique est conçu de façon à donner, au niveau d'un plan à éclairer, une image du diaphragme de sortie de l'embout.

Ces aspects de l'invention ainsi que d'autres aspects plus détaillés apparaîtront plus clairement grâce à la description suivante d'un mode de réalisation constituant un exemple non limitatif.

La figure 1 représente un luminaire selon l'invention.

La figure 2 représente en coupe un dispositif optique selon l'invention.

La figure 3 représente en perspective le dispositif optique de la figure 2.

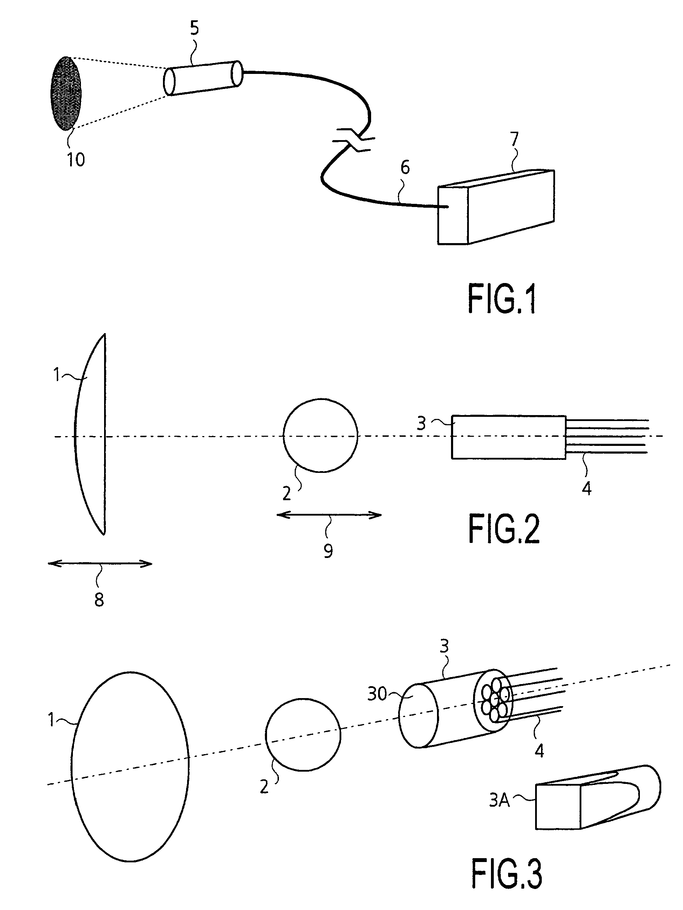

Le luminaire de la figure 1 comprend un générateur de lumière 7 contenant de façon connue une lampe et un dispositif optique pour introduire de la lumière dans un conduit de lumière 6. Ce conduit de lumière est un faisceau de fibres, par exemple en métacrylate, entouré d'une gaine opaque. Le conduit de lumière aboutit à un dispositif optique 5 d'extrémité qui crée une tache éclairée 10, ici de forme circulaire.

Le dispositif optique des figures 2 et 3 est placé à la sortie du conduit de lumière, ici un faisceau de fibres optiques 4. Il comprend une lentille simple 1 et une lentille boule 2, ainsi qu'un embout transparent 3, dit de mise en forme, abouté à l'extrémité du conduit de lumière 4. L'embout 3, la lentille boule 2, la lentille simple 1 sont placés dans cet ordre à partir de l'extrémité du conduit de lumière 4. Il est clair que ces éléments sont maintenus dans un boîtier par exemple cylindrique, connu en soi et non représenté.

L'embout 3 possède un diaphragme de sortie 30 (figure 3) ayant la forme désirée pour la tache éclairée, ici une forme circulaire. En 3A est indiqué un autre exemple de forme du diaphragme de sortie, ici une forme carrée. Il est clair que toute autre forme est possible : triangulaire, hexagonale, etc. Le diaphragme d'entrée, lui, est toujours circulaire et adapté au diamètre du conduit de lumière 4, en supposant que ce dernier est toujours de section globalement circulaire. L'embout a notamment pour effet de créer une tache unique au lieu de taches multiples représentant chacune des fibres du faisceau de fibres.

La lentille simple 1 est une lentille plan-convexe dont la face plane est par exemple tournée vers l'embout et le conduit de lumière. Ce dispositif optique est conçu de façon à donner, au niveau d'un plan à éclairer, une image du diaphragme de sortie 30 de l'embout ; ainsi la forme de la tache éclairée peut être choisie facilement en changeant d'embout. En outre, la position de la lentille simple 1 est réglable selon un déplacement longitudinal indiqué par la double flèche 8. Ceci permet de faire varier à volonté l'aspect de la tache lumineuse, notamment de rendre ses bords flous ou nets. La lentille simple 1 fait aussi office de diaphragme pour définit le bord de la tache lumineuse.

La position de la lentille boule peut aussi être rendue réglable selon un déplacement longitudinal indiqué par la double flèche 9. Ces déplacements longitudinaux peuvent facilement être obtenus par des moyens quelconques connus de l'homme du métier. Le déplacement à la fois de la lentille simple 1 et de la lentille boule 2 permet de réaliser une fonction "zoom" et ainsi de régler l'ouverture du faisceau, c'est-à-dire la dimension de la tache lumineuse.

## Revendications

1. Luminaire comprenant un faisceau de fibres optiques et un dispositif optique d'extrémité comportant une lentille simple, le dispositif optique d'extrémité est placé à la sortie du faisceau de fibres optiques et comprend un embout transparent, dit de mise en forme, abouté à l'extrémité du faisceau de fibres optiques et possédant un diaphragme de sortie, ledit dispositif optique étant conçu de façon à donner, au niveau d'un plan à éclairer, une image du diaphragme de sortie de l'embout de mise en forme, **caractérisé en ce que** ledit dispositif optique comprend de plus une lentille boule et lesdites lentille simple et lentille boule sont montées de façon mobiles dans le sens longitudinal.

2. Luminaire selon la revendication 1, **caractérisé en ce que** la lentille simple est une lentille plan-convexe dont la face plane est tournée vers le faisceau de fibres optiques.

## Claims

1. Luminaire comprising a bundle of optical fibres and an endpoint optical device comprised of a single lens, the endpoint optical device is positioned at the output of the bundle of optical fibres and comprises a transparent endpoint, called shaping endpoint, abutted to the end of the bundle of optical fibres and possessing an output diaphragm, said optical device being designed for producing at a plane to be illuminated an image of the output diaphragm of the shaping endpoint, **characterised in that** said optical device further comprises a spherical lens and said single lens and spherical lens are mounted to be movable in longitudinal direction.

2. A luminaire as claimed in claim 1, **characterised in that** the single lens is a plane-convex lens whose planar surface is turned towards the bundle of optical fibres.

## Patentansprüche

1. Leuchte mit einem Lichtwellenleiterbündel und einem optischen Endgerät mit einer einfachen Linse, wobei das optische Endgerät auf der Ausgangsseite des Lichtleiterbündels platziert ist und ein so genanntes formgebendes transparentes Endstück umfasst, das mit dem Ende des Lichtleiterbündels verbunden ist und eine Austrittsöffnung aufweist, wobei das genannte optische Gerät so ausgelegt ist, dass es auf einer zu beleuchtenden Ebene ein Bild der Austrittsöffnung des formgebenden Endstücks liefert, **dadurch gekennzeichnet, dass** das genannte optische Gerät außerdem eine Kugellinse umfasst, wobei die genannte einfache Linse und die genannte Kugellinse in der Längsrichtung beweglich montiert sind.

2. Leuchte nach Anspruch 1, **dadurch gekennzeichnet, dass** die einfache Linse eine Plankonvexlinse ist, deren plane Seite zum Lichtleiterbündel hin ausgerichtet ist.
